# EUROPEAN PATENT SPECIFICATION

(11) **EP 0 337 543 B1**
(45) Date of publication and mention of the grant of the patent: **20.01.1993**
(21) Application number: 89200856.6
(22) Date of filing: 05.04.1989
(51) Int. Cl.: E02D 5/52, F16L 58/18

(54) **Improvements relating to the joining of steel tube sections externally coated with thermoplastics**
Verbinden von thermoplastisch beschichteten Stahlrohrabschnitten
Aboutage de sections de tube d'acier pourvus d'un revêtement thermoplastique externe

(30) Priority: 14.04.1988 GB 8808833
(43) Date of publication of application: 18.10.1989
(73) Proprietor: F O Peterson & Söner Byggnads AB, S-404 39 Göteborg (SE)
(72) Inventor: Hultsjö, Sven, S-18364 Täby (SE)
(74) Representative: Hopfgarten, Nils

(56) References cited:
- EP-A- 0 186 168
- FR-A- 1 162 591
- GB-A- 794 833
- GB-A- 985 130
- GB-A- 1 214 632

## Description

This invention relates to the joining of steel tube sections externally coated with plastics and is particularly but not exclusively, applicable to the joining of steel tube sections which make up piles and to methods of piling using the methods of joining.

A usual method of reinforcing the foundations of buildings resting on loose foundation soil is to drive joinable piling members to solid bottom under or adjacent to load carrying structural components, and then transferring the load from the building to the finished pile in a suitable manner.

In the piling system to which the invention relates, joined piling members are driven to solid bottom with the aid of a high speed pile driver. Such a pile driver has a very light weight monkey, making up for this by hitting the upper part of the pile at a speed of about 10 m/s which is extremely high in connection with piling. Due to the high impact speed, and since the percussion tool is implemented such as to achieve a completely undampened percussion force transmission from the monkey to the steel tube forming the pile, a very intensive percussion force of short duration is generated in the pile. The load level is sufficiently high for verification of an intended carrying capacity being obtained in the ground under the pile shoe, i.e. where the percussion force is reflected during "trial loading" of the ground when piling is stopped, or alternatively achieving rupture in the ground during pile driving. The rapidly growing and intensive percussion force gives an acceleration of about 1000 g at the leading edge of the associated shock wave.

Such modern percussion tools have more design similarities with compressed air of hydraulically driven concrete breaking and rock drilling machines than with traditional pile drivers.

It is previously known to provide a joint between steel tubes in a piling system by using an external tubular sleeve, the sleeve being welded to either pile members which are to be joined. The sleeve and pile members will the be rigidly connected to each other and the weld will be subjected to a force of about 35 to 50 kN, namely the sleeve mass of about 3.5 to 5 kg times the acceleration of about 1000 g, and twice per blow, i.e. 800-1000 times per minute in opposite directions. Welds withstanding these stresses are very difficult to achieve in 76 mm thin-walled steel tubes which are normally used in this application, particularly since the steel has been given some of its high strength by cold working. A quality problem is thus created in this connection, since the joints successively disappear into the ground and thus cannot be inspected after finished driving.

The object of the present invention is to provide a new method of joining steel tubes externally coated with plastic, particularly but not exclusively those for use in building piling, where above mentioned problems of the prior art have been eliminated, and also to provide a method, of pile driving such steel tubes.

According to one aspect of the present invention, a method of producing a jointed steel tube which is externally coated with a thermoplastics which comprises connecting adjacent tube sections by a jointing sleeve, the method comprises heating the joining sleeve and the plastics coating on the tube sections to a highly plastic state of the plastics, whereafter each tube section end is pressed into the jointing sleeve while heated plastics material at the outer circumference of the tube section is forced away, the jointing sleeve having an inside diameter somewhat less than the outside diameter of the plastics coating on the tube sections.

Thus, the objects set out below are achieved by methods in accordance with the invention by heating the joint sleeve and heating the plastics coating of the tubes to a highly plastic state, the pipe ends then being pressed in under the joint sleeve while forcing away heated plastics material on the outside circumference of the tubes, the joint sleeve having an inside diameter somewhat less than the outer diameter of the plastics coating on the tubes.

According to another aspect of the invention, the method of pile driving comprises driving a first steel tube section having an exterior plastics coating connecting thereto a second steel tube section having an exterior plastics coating and driving the connected first and second tube sections, the connection being produced by a method according to the first aspect of the invention.

Thus, when the invention is applied to piling, the joint sleeve is hot-melt glued to both pile members and is therefore connected to these via a thin layer of plastics, which dampens, cushions and partially absorbs the extreme acceleration, resulting in that the sleeve with moderate inertia loads accompanies the pile downwards into the ground without needing to participate in the extreme direction changing accelerations of the particles of the piling steel. With the method in accordance with the invention there is thus achieved a pile joint where a thin plastics glue layer between sleeve and pile at least partially isolates the joint sleeve from the shock wave accelerations generated in the pile during driving.

The above-mentioned principle leads to some energy absorption in the plastics, which results in heating of the plastics. When a pile is being driven for a long time, this heating can lead to the plastics layer above or below the joint between the pile members becoming so warm that it melts or becomes plastic, thus permitting the joint sleeve to move along the pile with the aid of the undampened inertia forces as the plastics coating continuously melts in the vicinity of the sleeve joint. With the object of preventing this extremely undesirable effect, the sleeve may be pre-heated to an even higher temperature before mounting it on one member so that when it cools it shrinks and thereby securely grips the member. Thus this is a method of ensuring, by controlled thermal shrinking of the joint sleeve in connection with the construction above, that the sleeve cannot move along the pile after being fitted, in spite of the energy absorption in conjunction with pile driving and a possible unintentional melting of the plastics layer on the piling members.

The method in accordance with the invention gives a rigid joint without the reduction of the material thickness of the piling tubes which occurs when using threaded muffs for joining, and without the risk of damage to the protection against corrosion which occurs when the joint is welded.

When the temperature of the plastics layer drops, after pressing the tube ends into the sleeve, the strength of the layer increases, and both tube sections will thus be securely joined.

A special jointing tool can be utilized for centering the sleeve in relation to the plastics coated steel tube which is pressed into the sleeve. To obtain good adhesion between sleeve and piling member, the sleeve can be internally coated with a glue having a melting temperature which is somewhat higher than the temperature required to make the plastics coating on the tubes highly plastic, such that when the members are pressed into the sleeve and the latter is heated to a temperature at which the glue melts, the glue will fasten the sleeve to the remaining plastics layer on the pipe sections when the joint is left to cool. Thus the joint can take up moderate tensile forces as well.

The invention may be carried into practice in various ways but the manufacture of one joint in accordance with the invention will now be described by way of example with reference to the accompanying drawings in which:
Figure 1 is a longitudinal section through two tube sections and a jointing tool; and
Figure 2 illustrates an embodiment of a jointing sleeve suitable for use in connection with the invention.

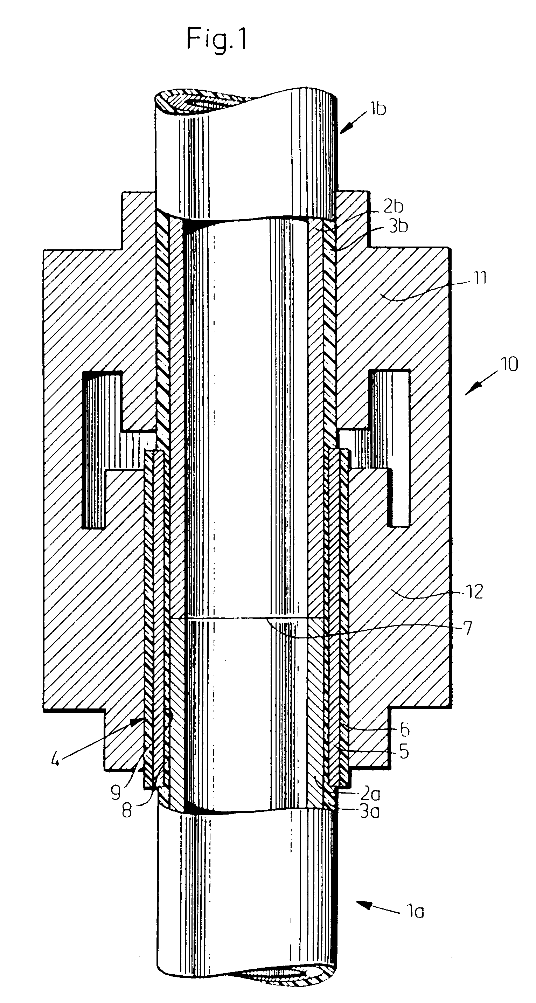

Figure 1 is a section along the central axis of the pile members at the vicinity of the joint. The Figure shows a lower member 1a, which can be assumed to be already driven into the ground to form a part of a building pile. The member comprises an inner steel tube 2a with an outer, strong, corrosion protecting coating of a thermoplastics 3a, e.g. of the PVC type. The member 1a is intended to be joined to a member 1b similarly comprising a steel tube 2b with an exterior plastics coating 3b. The joint is achieved with the aid of a jointing sleeve comprising an inner steel sleeve 5 with an external coating 6 of plastics in an implementation similar to the members 1a and 1b. The inside diameter of the sleeve 5 is somewhat less than the outside diameter of the plastics layers 3a, 3b and somewhat larger than the inside diameter of these layers 3a and 3b. The joint is made with the aid of a jointing tool 10 comprising an integral upper section 11 and an integral lower section 12, and has considerable extension in the longitudinal direction of the members 1a and 1b. The section 11 has a bore tightly surrounding the member 1b and the section 12 has a bore tightly surrounding the joint sleeve 5. The tool 10 can suitably be divided, e.g. along a plane parallel to the central axis of the members 1a, 1b. It can then easily be caused to surround the respective members and jointing sleeve without needing to be brought over the end of a member. At the section 11, and optionally at the section 12 as well, the tool can be provided with electrical heating elements with means for connecting them to a current source.

In making the joint, the end portions of the members adjacent the joint faces 7 are heated, the plastics material in the plastic layers 3a and 3b of the members then becoming highly plastic. The tube ends are then pressed into the joint sleeve until they meet each other at 7. During this procedure some of the plastic layer 3a has been sheared away or otherwise removed by the end edges of the joint sleeve, yet leaving a plastics layer between the inner surface of the sleeve 5 and the outer surface of the steel tubes 2a, 2b, such as to achieve a bond between the sleeve and tube ends after the plastics has been allowed to cool.

In applying the method in accordance with the invention for providing building piles, it is suitable to start from factory produced units including a tube section and a jointing sleeve attached thereto in accordance with the invention. At the piling site itself it is then only necessary to heat the jointing sleeve and the end portion of the tube section which is to be inserted in the jointing sleeve of the tube which upwardly terminates the pile being driven. This technique is also advantageous in many other applications.

Before inserting the tube ends into the jointing sleeve, it can be internally coated with a layer of a glue or a plastics material having a melting point which is higher than the temperature at which the plastics coating of the tubes becomes highly plastic. After the joint described above has been made, the sleeve can be heated in a separate operation so that the melting point of the glue is attained, the glue then forming a reliable bonding layer in the interface 9 between the inside surface of the sleeve and the remaining plastics layer 8 of the tube ends after the glue has cooled.

It has been found that a superior result in the joining method is achieved if the following steps are taken.
1. The dimension of the jointing sleeve is selected in relation to the dimension of the pile tube cross-section such that the gap between sleeve and tube section does not exceed 2 mm. There is thus ensured the necessary straightness and tensile strength of the jointed pile.
2. The gap between the jointing sleeve and the tube section shall not be below 0.2 mm. There is thus ensured that the plastics is not stripped off from the tubes during the jointing process.
3. The interior surface of the jointing sleeve is chamfered at the ends thereof. In this way the plastics material coating the tubes will be more effectively pressed into the above-mentioned gap between the sleeve and the tubes.
4. The plastics coating the tubes is heated to a softening temperature over 70°C before the joining operation. There is thus ensured good plasticity of the plastics during this operation. However, the temperature of the plastics must not be higher than about 400°C to avoid carburization.
5. The jointing sleeve is heated during the joining operation to above 175°C, suitably to above 225°C and preferably to about 300°C. In this way the sleeve will shrink considerably during the later cooling, and compress the jointing material between the sleeve and tube so that great rigidity and tensile strength of the jointed pile is achieved. The sleeve should not be heated to a higher temperature than about 400°C.

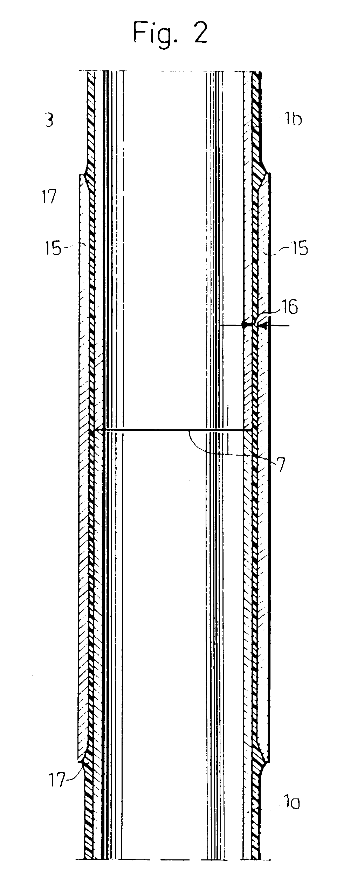

In Figure 2 there is illustrated an embodiment of a jointing sleeve suitable for use in connection with the invention and the joint made between two pile members in accordance with the invention. As in Figure 1, the pile members are denoted by 1a and 1b and their exterior plastics coating by 3. The jointing sleeve 15 has an inside diameter which is only so much larger than the outside diameter of the steel tubes of the pile members that the annular gap between sleeve and tube has a width 16 of between 0.2 and 2 mm, whereby it is ensured that the jointed pile will have, and can maintain, necessary straightness and tensile strength simultaneously as the risk of stripping all plastics material from the pile members during joining is avoided. Contributing to the latter is also the characterizing feature that the jointing sleeve has its end surfaces chamfered on the inside to form a conical portion 17 which assists the plastic material 3 to be more easily pressed into, and compressed in the gap between the sleeve and steel tubes of the pile members.

According to advantageous embodiments of the invention, the joint is made with the jointing sleeve being heated to at least 175°C, suitably to at least 225°C, and preferably to about 300°C, before the tube ends are inserted into the sleeve, whereby the plastics material in the gap between the sleeve and steel tubes of the pile members will be considerably compressed when the sleeve has cooled, and the sleeve thus obtaining very high rigidity and tensile strength.

The invention is not restricted to what has been described above in connection with the description of an embodiment. For example the method and jointing sleeve in accordance with the invention are also utilizable for joining tube elements other than pile members, although the invention is primarily intended for joining pile members.

## Claims

1. A method of producing a jointed steel tube which is externally coated with a thermoplastics which comprises connecting adjacent tube sections by a jointing sleeve, the method comprising heating the jointing sleeve and the plastics coating on the tube sections to a highly plastic state of the plastics, whereafter each tube section end is pressed into the jointing sleeve while heated plastics material at the outer circumference of the tube section is forced away, the jointing sleeve having an inside diameter somewhat less than the outside diameter of the plastics coating on the tube sections.

2. A method as claimed in Claim 1 in which the jointing sleeve is heated to at least 175°C.

3. A method as claimed in Claim 1 in which the sleeve is heated to at least 225°C.

4. A method as claimed in Claim 1 in which the sleeve is heated to about 300°C.

5. A method as claimed in any of the preceding claims in which the inside diameter of the sleeve is selected in relation to the outside diameter of the steel tube sections such that an annular gap with a width of between 0.2 an 2 mm is obtained between the sleeve and the steel tube sections.

6. A method as claimed in any one of the preceding claims in which the plastics material on the tube section is heated to at least about 75°C before the tube section ends are inserted into the sleeve.

7. A method as claimed in any of the preceding claims in which the tube section ends to be joined are inserted into the sleeve successively as follows: a first section end and the sleeve are heated; the first section end is inserted into the sleeve; the first section end and the sleeve are returned to normal temperature; the first section end, the sleeve and the second section end are heated; and the second section end is inserted into the sleeve.

8. A method as claimed in any of the preceding claims in which the sleeve has an internal chamfer at at least one of its ends.

9. A method as claimed in any of the preceding claims in which the sleeve has an exterior plastics coating.

10. A method of pile driving comprises driving a first steel tube section having an exterior plastics coating connecting thereto a second steel tube section having an exterior plastics-coating and driving the connected first and second tube sections, the connection being produced by a method as claimed in any of the preceding claims.

## Patentansprüche

1. Verfahren zum Herstellen eines zusammengesetzten Stahlrohrs, welches außen mit einem thermoplastischen Kunststoff beschichtet ist, wobei einander benachbarte Rohrabschnitte mittels einer Verbindungshülse miteinander verbunden werden und gemäß dem Verfahren die Verbindungshülse und die Kunststoffbeschichtung der Rohrabschnitte derart erhitzt werden, daß ein plastisch leicht verformbarer Zustand des Kunststoffs gewährleistet ist, wonach die Enden der Rohrabschnitte in die Verbindungshülse gepreßt werden, während das erhitzte Kunststoffmaterial am Außenumfang der Rohrabschnitte verdrängt wird, wobei ein Innendurchmesser der Verbindungshülse etwas kleiner als der Außendurchmesser der Kunststoffbeschichtung der Rohrabschnitte ist.

2. Verfahren nach Anspruch 1, wobei die Verbindungshülse zumindest auf 175 °C erhitzt wird.

3. Verfahren nach Anspruch 1, wobei die Verbindungshülse zumindest auf 225 °C erhitzt wird.

4. Verfahren nach Anspruch 1, wobei die Verbindungshülse zumindest auf 300 °C erhitzt wird.

5. Verfahren nach einem der vorangehenden Ansprüche, wobei der Innendurchmesser der Hülse im Vergleich zu dem Außendurchmesser der Stahlrohrabschnitte derart gewählt wurde, daß ein Ringspalt mit einer Breite zwischen 0,2 und 2 mm zwischen der Hülse und den Stahlrohrabschnitten ausgebildet wird.

6. Verfahren nach einem der vorangehenden Ansprüche, wobei das auf den Rohrabschnitten befindliche Kunststoffmaterial mindestens auf etwa 75 °C erhitzt wird, bevor die Enden der Rohrabschnitte in die Hülse eingesetzt werden.

7. Verfahren nach einem der vorangehenden Ansprüche, wobei die Enden der miteinander zu verbindenden Rohrabschnitte in die Hülse nacheinander wie folgt eingesetzt werden: ein erstes Rohrabschnittende und die Hülse werden erhitzt; das erste Rohrabschnittende wird in die Hülse eingesetzt; das erste Rohrabschnittende und die Hülse kehren zur normalen Temperatur zurück; das erste Rohrabschnittende, die Hülse und das zweite Rohrabschnittende werden erhitzt; und das zweite Rohrabschnittende wird in die Hülse eingesetzt.

8. Verfahren nach einem der vorangehenden Ansprüche, wobei die Hülse zumindest an einem ihrer Enden mit einer inneren Fase versehen ist.

9. Verfahren nach einem der vorangehenden Ansprüche, wobei die Hülse mit einer äußeren Kunststoffbeschichtung versehen ist.

10. Verfahren zum Eintreiben von Pfählen, wobei ein erster Stahlrohrabschnitt mit einer äußeren Kunststoffbeschichtung eingetrieben wird und mit einem zweiten Stahlrohrabschnitt verbunden wird, welcher mit einer äußeren Kunststoffbeschichtung versehen ist, und die miteinander verbundenen Rohrabschnitte erster Rohrabschnitt und zweiter Rohrabschnitt gemeinsam eingetrieben werden, wobei die Verbindung durch ein Verfahren nach einem der vorangehenden Ansprüche hergestellt wird.

## Revendications

1. Procédé pour réaliser un tube d'acier comportant des tronçons multiples qui est revêtu extérieurement au moyen d'un matériau thermoplastique qui comporte le fait de raccorder des tronçons de tubes adjacents par un fourreau de liaison, le procédé consistant à chauffer le fourreau de liaison et le revêtement plastique des tronçons de tube à un état plastique élevé de la matière plastique à la suite de quoi chaque extrémité de tronçon de tube est pressée dans le fourreau de liaison alors que le matériau plastique chauffé à la circonférence extérieure est expulsé, le fourreau de liaison ayant un diamètre interne quelque peu inférieur au diamètre extérieur du revêtement plastique des tronçons de tube.

2. Procédé tel que revendiqué à la revendication 1 dans lequel le fourreau de liaison est chauffé à au moins 175°C.

3. Procédé tel que revendiqué à la revendication 1 dans lequel le fourreau est chauffé à au moins 225°C.

4. Procédé tel que revendiqué à la revendication 1 dans lequel le fourreau est chauffé à environ 300°C.

5. Procédé tel que revendiqué dans l'une quelconque des revendications précédentes dans lequel le diamètre intérieur du fourreau est choisi en fonction du diamètre extérieur des sections de tube d'acier de telle sorte qu'un espace annulaire d'une valeur comprise entre 0,2 et 2 mm est obtenu entre le fourreau et les tronçons de tube d'acier.

6. Procédé tel que revendiqué dans l'une quelconque des revendications précédentes dans lequel le matériau plastique qui se trouve sur le tronçon de tube est chauffé à au moins environ 75°C avant que les extrémités de tronçons de tube ne soient introduites dans le fourreau.

7. Procédé tel que revendiqué dans l'une quelconque des revendications précédentes dans lequel les extrémités des tronçons de tube qu'il y a lieu de raccorder sont introduites dans le fourreau successivement comme suit : on chauffe une première extrémité de tronçon et le fourreau ; on introduit la première extrémité de tronçon dans le fourreau ; on ramène l'extrémité du premier tronçon et le fourreau à une température normale ; on chauffe l'extrémité du premier tronçon, le fourreau et l'extrémité du second tronçon ; et on introduit l'extrémité du second tronçon dans le fourreau.

8. Procédé tel que revendiqué dans l'une quelconque des revendications précédentes dans lequel le fourreau comporte un chanfrein interne à au moins une de ses extrémités.

9. Procédé tel que revendiqué dans l'une quelconque des revendications précédentes dans lequel le fourreau comporte un revêtement extérieur en matière plastique.

10. Procédé d'enfoncement de pieu qui consiste à enfoncer un premier tronçon de tube d'acier comportant un revêtement externe en matière plastique, à y raccorder un second tronçon de tube d'acier comportant un revêtement externe en matière plastique et à enfoncer les premier et second tronçons de tube raccordés, les raccords étant réalisés par le procédé tel que revendiqué dans l'une quelconque des revendications précédentes.
